# FASCICULE DE BREVET EUROPEEN

(11) **EP 1 860 879 B1**
(45) Date de publication et mention de la délivrance du brevet: **19.11.2008**
(21) Numéro de dépôt: 07107077.5
(22) Date de dépôt: 27.04.2007
(51) Int. Cl.: H04N 7/167, H04N 5/00, H04N 7/24

(54) **Procédé de décodage d'un signal audio vidéo**
Verfahren zur Entschlüsselung eines Audio-Video-Signals
Method of decoding an audiovisual signal

(30) Priorité: 24.05.2006 FR 0651908
(43) Date de publication de la demande: 28.11.2007
(73) Titulaire: Sagem Communications, 75512 Paris (FR)
(72) Inventeur: Delplace, Stéphane, 60240, Chaumont en Vexin (FR)
(74) Mandataire: Schmit, Christian Norbert Marie

(56) Documents cités:
- EP-A2- 1 624 669
- US-A1- 2005 008 323
- US-A1- 2006 001 776
- EIDSON S ET AL: "HDMI: HIGH-DEFINITION MULTIMEDIA INTERFACE" 2003 SID INTERNATIONAL SYMPOSIUM DIGEST OF TECHNICAL PAPERS. BALTIMORE, MD, MAY 20 - 22, 2003, SID INTERNATIONAL SYMPOSIUM DIGEST OF TECHNICAL PAPERS, SAN JOSE, CA : SID, US, vol. VOL. 34 / 2, 20 mai 2003 (2003-05-20), pages 1024-1027, XP001174221

## Description

La présente invention a pour objet un procédé de décodage d'un signal audio vidéo. Elle est plus particulièrement destinée au décodage des signaux audio vidéo cryptés et le but de l'invention est de concourir au respect des droits d'auteur des producteurs d'oeuvres audio visuelles.

Dans le domaine de la représentation des oeuvres audio visuelles, on connaît des équipements comportant notamment un décodeur et un dispositif de visualisation, un récepteur, relié au décodeur. Le décodeur reçoit de différentes manières, par transmission ou par lecture d'une mémoire interne ou externe, des informations représentatives d'une oeuvre audio visuelle. Le décodeur décode ces informations, les décrypte quand elles sont cryptées, et les transmet au dispositif de visualisation. Pour éviter que les oeuvres ainsi diffusées sur le dispositif de visualisation ne soient dupliquées par prélèvements au cours de leur transmission entre le décodeur et le dispositif de visualisation, la transmission à ce dernier est cryptée. La norme qui est utilisée pour effectuer ce cryptage est la norme dite HDCP. Elle pourrait être autre. Les transmissions elles-mêmes sont effectuées selon les protocoles dits HDMI ou DVI.

Le protocole HDMI (High-Definition Multimedia Interface - Interface Multimedia Haute - Définition) est une norme de transmission de signaux vidéo et audionumériques créée par un consortium de constructeurs de matériels de télévision. Le but de cette norme est de remplacer une prise dite péritel sur les différents appareils grand public comme les téléviseurs haute définition, les lecteurs de disques optiques numériques de salon, notamment enregistrés aux normes HD-DVD, les moniteurs, les magnétoscopes, les récepteurs satellites, etc.

Cette norme a été mise en place en 2002 (version 1.0), et révisée en 2004 (version 1.1), puis en 2005 (version 1.2). Elle permet de transmettre du son multicanaux (jusqu'à 8) en numérique ou un simple signal stéréo en numérique également. Les fréquences d'échantillonnage possibles sont 32khz, 44.1khz ou 48khz à 192khz (multicanal). La vidéo est transmise en numérique codée sur 3 canaux de 8 bits chacun de la même manière que pour la transmission de signaux DVI, l'audio est associé à deux des 3 canaux, celui-ci est codé sur 4 bits. Le HDMI s'appuie sur la technologie de protection du contenu de type HDCP.

Les résolutions vidéo standard en HDMI ou DVI sont : 640x480p @ 59.94/60Hz, 720x480p @ 59.94/60Hz, 720(1440)x480i @ 59.94/60Hz, 720x576p @ 50Hz. Les résolutions haute définition sont 1280x720p @ 59.94/60Hz, 1920x1080i @ 59.94/60Hz, 1280x720p @ 50Hz, 1920x1080i @ 50Hz, 720(1440)x576i @ 50Hz , p veut dire progressif , i veut dire entrelacé.

Ce nouveau standard numérique universel permet de véhiculer sans compression à la fois de la vidéo numérique haute résolution et du son numérique multicanal (huit canaux à 192 kHz sur 24 bits), le tout sécurisé par le mécanisme de protection contre la copie HDCP (High bandwidth Digital Content Protection).

Le protocole HDMI ne définit que le lien entre deux appareils : la source (récepteur-décodeur audio-vidéo par exemple) et la cible (afficheur ou répéteur devenant une source).

Le lien HDMI transporte les données vidéo proprement dites (pixels, horloge et synchro), des informations sur la nature du flux, des échantillons audio et l'information sur leur horloge et le type de codage, cela de la source vers la cible. L'interface HDMI permet d'atteindre une bande passante de 5 Gb/S. Un seul lien suffit pour supporter sans aucune compression les résolutions SXGA (1280x1024 à 85 Hz), UXGA (1600x1200 à 60 Hz), SDTV 480i, 480p, 576i et 576p et HDTV 720p et 1080i. Le codage vidéo accessible est le codage en RVB 4:4:4, YCbCr 4:2:2 et YCbCr 4:4:4 pour un flux de 25 à 165MHz (standard) ou 330MHz avec un connecteur B. L'encodage est compatible DVI (dual-link avec le connecteur B), synchro séparée, formats vidéo standards.

Pour la partie audio les données sont transmises sans leur horloge, le récepteur reconstituant la base de temps à partir de l'horloge vidéo. Il utilise quatre paires différentielles, trois pour les informations audio et vidéo, et une pour les signaux d'horloge.

Exploitant des signaux identiques au DVI, le protocole HDMI est totalement compatible avec ce standard, des adaptateurs permettant de faire communiquer les deux standards.

La norme Digital Visual Interface (DVI), Interface Visuelle Numérique fut aussi appelée Digital Video Interface (appellation obsolète) lors de sa conception par un groupe de travail sur la visualisation numérique. Elle est une norme de transmission de signaux vidéo. Elle utilise une connexion numérique qui sert à relier une carte graphique à un écran. Elle n'est avantageuse (par rapport à la norme VGA) que sur les écrans où les pixels sont physiquement séparés (et donc indépendants) ce qui est le cas sur tous les écrans de type LCD, plasma, OLED (diode électroluminescente organique - Organic Light-Emitting Diode) et autres. Ceci n'est pas le cas des écrans à tube cathodique, où le faisceau d'électrons reproduit, en direct, les variations du signal analogique.

Une liaison DVI améliore sensiblement la qualité de l'affichage par rapport à une connexion VGA grâce à une séparation des nuances de couleur pour chaque pixel : image parfaitement nette, grâce à une transmission numérique (sans perte) des nuances de couleur. Elle est l'équivalent numérique de la liaison analogique RVB (Rouge Vert Bleu) mais véhiculée sur trois liaisons LVDS (low voltage differential signal) par 3 paires torsadées blindées. De plus, comme tous les écrans (sauf à tube cathodique) sont numériques en interne, la liaison DVI évite la conversion analogique numérique (A/N) par la carte graphique. En revanche la conversion numérique analogique (N/A) dans l'écran reste nécessaire avec toutes les pertes que cela engendre, auquel il faut rajouter les pertes et les parasites lors du transfert par le câble.

L'interface DVI permet d'éviter toutes ces pertes. Le connecteur DVI existe en trois types de prise : le DVI-A (DVI-Analogique) qui transmet uniquement le signal analogique, le DVI-D (DVI-Numérique) qui transmet uniquement le signal numérique, et le DVI-I (DVI-Intégré) qui reprend (sur des broches séparées) le signal numérique du DVI-D et le signal analogique du DVI-A. Actuellement, toutes les sorties DVI des cartes graphiques sont des DVI-I. Or, si l'écran propose une entrée DVI, il ne fera attention qu'aux broches numériques (autrement dit les broches de la norme DVI-D) et ignorera les broches analogiques de son connecteur DVI.

Le DVI-I permet de brancher un adaptateur "DVI vers VGA" qui n'est autre qu'un câble avec d'un côté une prise DVI et de l'autre une prise VGA (pour brancher un écran à tube cathodique). Ce n'est pas un convertisseur numérique/analogique. Autrement dit, la majorité des connecteurs DVI, bien qu'ils soient à la norme DVI-I, sont utilisés comme des DVI-D.

La norme HDCP (High-Bandwidth Digital Content Protection - protection de contenu numérique transmis à haute vitesse) est une norme de gestion de droits numériques (Digital Rights Management - DRM) pour contrôler des contenus numériques audio et vidéo lors de leurs transmissions selon les protocoles DVI ou HDMI.

Les problèmes rencontrés pour la mise en oeuvre de ces protocoles sont les suivants. Parce que le protocole de type HDMI est relativement récent, le respect de ses contraintes n'est que partiellement satisfait par les différents appareils sensés le mettre en oeuvre, en particulier les dispositifs de visualisation. En pratique, il arrive qu'un décodeur apte à mettre en oeuvre le protocole de transmission HDMI et le protocole de transmission DVI, soit connecté à un récepteur de visualisation imparfait. La transmission des images et du son, du décodeur au récepteur, ne produit pas alors les effets attendus : l'utilisateur est mécontent.

En pratique, l'écran du récepteur présente dans ce cas une image de neige, une image monochrome, noire, verte ou autre, voire un balayage d'images par défaut de synchronisation, ou tout autre type de problèmes de ce genre. Alors que le même décodeur avec un récepteur de visualisation, fonctionne correctement, ce succès ne se produit pas avec d'autres récepteurs. Ces autres récepteurs supportent mal le protocole HDMI, malgré leur prétention à être de type HD-Ready, ce qui veut dire récepteur prêt à recevoir des signaux haute définition (en particulier selon le protocole HDMI, ou le protocole DVI). Cette situation laisse l'utilisateur dans l'impuissance de résoudre le problème.

Dans l'invention, pour résoudre ce problème, on a constaté que, le protocole de type DVI étant plus ancien, il est bien mieux supporté et typiquement ce genre de problèmes ne se produit pas avec lui. Dans l'invention, lorsque ce problème survient, on le détecte, et on provoque alors la commutation du protocole de transmission du protocole HDMI en protocole DVI. La commutation est faite le plus possible de façon à être transparente pour l'utilisateur, de sorte que ce dernier ne se rend même pas compte du problème.

Selon les types des défauts présentés par le récepteur, la détection du problème prend une forme ou une autre et les perfectionnements de l'invention ont pour objet de prendre en considération les diverses situations qui se présentent.

L'invention a donc pour objet un procédé de décodage d'un signal audio vidéo dans lequel
- on reçoit un tel signal dans un décodeur,
- on le décode dans le décodeur, et on obtient un signal numérique crypté,
- on transmet, selon un protocole HDMI, le signal numérique crypté, correspondant au signal audio vidéo crypté, du décodeur à un récepteur muni d'un écran de visualisation et de dispositifs de diffusion du son, caractérisé en ce que
- on vérifie que le protocole HDMI est correctement supporté par le récepteur, et
- si ce n'est pas le cas,
- on commute le protocole de transmission du protocole HDMI en protocole DVI,
- on transmet le signal numérique crypté du décodeur au récepteur selon le protocole DVI.

L'invention sera mieux comprise à la lecture de la description qui suit et à l'examen des figures qui l'accompagnent, celles-ci ne sont présentées qu'à titre indicatif et nullement limitative de l'invention. Les figures montrent :
- Figure 1 : la représentation schématique d'un dispositif utilisable pour mettre en oeuvre le procédé de décodage de l'invention ;
- Figure 2 : l'organigramme des opérations essentielles du procédé de décodage de l'invention.

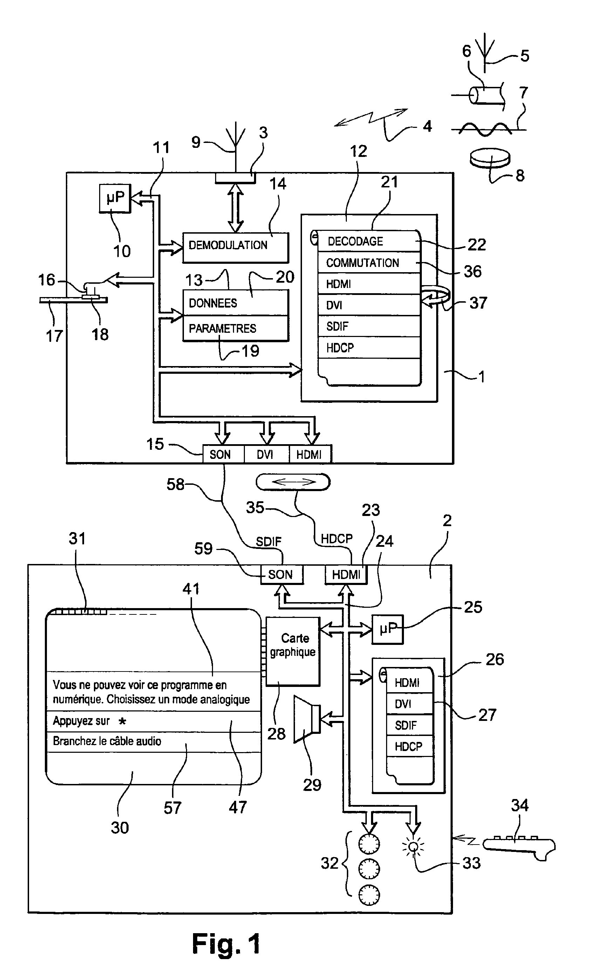

La Figure 1 montre un dispositif général pour mettre en oeuvre le procédé de décodage de l'invention. Ce dispositif comporte essentiellement un décodeur 1 et un récepteur 2 de visualisation. Le décodeur 1 comporte une interface 3 par laquelle il reçoit un signal audio vidéo 4, crypté ou non. S'il est crypté, le décodeur 1 devra le décrypter. Le signal 4 peut être transmis par l'intermédiaire d'un aérien 5, d'une connexion coaxiale 6, d'une ligne bifilaire 7 ou même provenir d'un dispositif de stockage 8, de type disque dur, directement connecté à l'interface 3. L'interface 3 peut par ailleurs être connecté à un aérien 9 en cas de diffusion hertzienne. Le décodeur 1 comporte dans son principe un micro processeur 10 relié par un bus 11 de données, d'adresses et de commandes à une mémoire programme 12, une mémoire de données et de paramètres 13, un démodulateur 14, et une interface de sortie 15. Le démodulateur 14 sert à démoduler les signaux 4 reçus sur l'interface 3, lorsqu'ils sont modulés.

La plupart du temps, les signaux audio vidéo décodés par le décodeur 1 sont des signaux cryptés. Dans ce cas, le décodeur 1 peut comporter par ailleurs un lecteur 16 d'une carte 17 à puce 18. La puce 18 contient, en plus le cas échéant de données utiles au décryptage des signaux audio vidéo 4 reçus, des informations d'abonnement d'un utilisateur du décodeur 1 aux programmes diffusés par une chaîne de radio télévision. La carte 17 à puce 18 peut être remplacée par tout autre dispositif amovible, voire être elle-même remplacée par un enregistrement dans la mémoire 13 de données d'abonnement et de décryptage reçues par l'interface 3, et transmises par exemple par la chaîne de radio télévision aux utilisateurs à jour du paiement de leurs abonnements.

A cet effet, la mémoire 13 peut comporter une zone de paramètres 19 renseignant sur tous ces paramètres d'abonnement, de décryptage et autres. L'invention est applicable aussi aux cas où le signal 4 n'est pas crypté. La mémoire 13 peut par ailleurs comporter une zone de stockage de données 20 pour mémoriser certaines des oeuvres reçues en signal audio vidéo par l'interface 3. Les données stockées dans la zone 20 peuvent avoir été décodées et être stockées décodées (et décryptées), ou être stockées brutes et nécessiter leur décodage ultérieur.

A cet effet, la mémoire programme 12 comporte un programme général 21 lui-même comportant un sous programme 22 de décodage capable de décoder, et au besoin de décrypter le signal 4 audio vidéo reçu.

Au moment de la transmission du décodeur 1 au récepteur 2 de visualisation, ce décodage conduit à la production d'un signal numérique crypté transmis par le bus 11 à l'interface 15. Le signal numérique crypté est crypté selon la norme HDCP, de préférence, bien que, si d'autres standards apparaissent, ils pourraient être cryptés selon ces autres standards. Le signal disponible sur l'interface 15 est ainsi crypté pour qu'un utilisateur indélicat ne puisse prélever sur l'interface 15 une copie de l'oeuvre non cryptée et ne puisse la faire représenter sur tout autre récepteur, en fraude des droits du créateur de l'oeuvre audio visuelle concernée.

Le récepteur 2 possède de son côté un port d'entrée 23, prétendument compatible avec le protocole de transmission HDMI et qui, on l'a constaté dans l'invention, était toujours compatible avec le protocole de transmission DVI. Le port de réception 23 est connecté par l'intermédiaire d'un bus 24 (du même type que le bus 11) du récepteur 2 à un microprocesseur 25, à une mémoire programme 26, munie d'un programme 27, à une carte graphique 28 et à un dispositif schématiquement représenté 29 de diffusion du son. La carte 28 graphique est une interface reliée à un écran de visualisation 30 du type à pixels 31 séparés. Le dispositif 29 de diffusion du son peut notamment être un dispositif du type dit Home Cinéma, cinéma à la maison. Le bus 24 est par ailleurs relié à un jeu de boutons de commande tel que 32 du récepteur 2 ou, ce qui est équivalent, à un récepteur (ou un émetteur récepteur) 33 de signaux diffusés par un dispositif de télécommande 34. Le dispositif 34 permet de télécommander le récepteur 2, voire le décodeur 1, par l'intermédiaire d'une liaison 35 qui relie le port 23 à l'interface 15.

Normalement, les liaisons vidéo de type DVI utilisent un connecteur spécifique, de forme différente du connecteur utilisable pour la transmission du protocole HDMI. Toutefois, sachant que les signaux du protocole HDMI sont complètement compatibles avec les signaux du protocole DVI, l'interface 15, et le port 23, peuvent se satisfaire de n'avoir qu'un seul type de connecteur : les connecteurs au format HDMI.

Quand tout va bien, le mode d'échange entre le décodeur 1 et le récepteur 2 se réalise selon le protocole HDMI. Le problème survient lorsque sur l'écran 30 du récepteur 2, on constate la présence d'une image dégradée.

Dans l'invention, à l'aide d'un sous programme 36 du programme 21, on résout ce problème. Le sous programme 36 est un sous programme de commutation. Il comporte deux opérations principales. D'une part, il vérifie que le protocole HDMI est correctement supporté par le récepteur 2 et, si ce n'est pas le cas, au cours d'une deuxième opération essentielle, il provoque la commutation 37 du protocole de transmission HDMI en protocole de transmission DVI. Le décodeur 1 transmet ensuite au récepteur 2 les signaux numériques cryptés selon le protocole DVI.

Il en résulte immédiatement le rétablissement de l'image correcte sur l'écran 30 puisque, l'expérience le montre, le protocole de transmission DVI étant plus ancien, il est mieux supporté. Le problème rencontré est donc résolu, au moins en partie. En effet, le protocole de transmission DVI est un protocole de transmission vidéo seulement, il n'y a pas le son. Mais au moins, en agissant ainsi, on dispose des images.

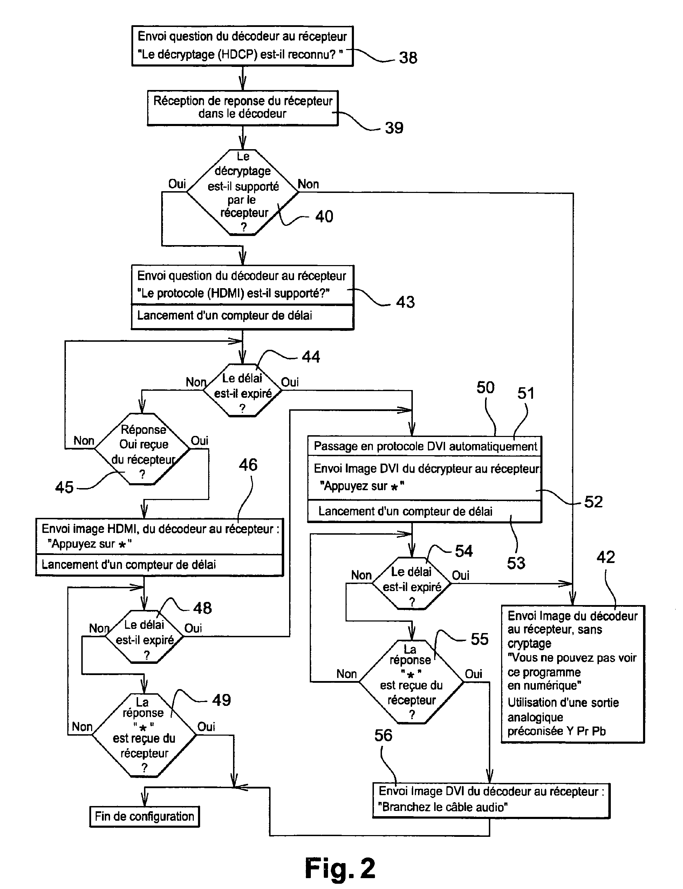

Sur la figure 2, on va montrer quelles sont les différentes opérations menées par le sous programme 36 de commutation permettant d'une part d'effectuer la commutation vue ci-dessus et d'autre part de résoudre tous les problèmes supplémentaires, notamment celui d'une satisfaction plus complète de l'utilisateur en lui mettant le son à disposition.

Le sous programme 36 commence par une instruction préliminaire 38 de vérification que le décryptage (notamment le décryptage de type HDCP) est reconnu par le récepteur 2. En effet, si ce décryptage n'est pas reconnu, il est inutile de tenter de mettre en oeuvre les protocoles HDMI ou DVI puisqu'ils ne seront pas autorisés par le diffuseur ou l'ayant droit du contenu. A cet effet, les protocoles HDMI, ainsi que DVI, comportent, dans des phases d'établissement, des phases d'échanges permettant de s'informer mutuellement de leurs aptitudes. Dans le sous programme 36, une telle phase est mise en oeuvre en ce qui concerne le décryptage. Elle correspond à une lecture d'une information dans le récepteur 2 de ce que le récepteur 2 est capable de décrypter, par exemple qu'il est compatible avec la norme HDCP.

Le décodeur 1 reçoit ensuite, au cours d'une étape 39, la réponse du récepteur 2 et au cours d'un test 40 ultérieur, il évalue cette réponse. Soit, il déduit que le récepteur n'est pas capable de décrypter les signaux, soit, il déduit qu'il en est capable. S'il déduit qu'il n'en est pas capable, il envoie une image au décodeur, dans un mode non crypté, qui s'affiche sur l'écran 30. Le message 41 contenu dans cette image informe l'utilisateur qu'il ne peut pas voir le programme en mode numérique, mais qu'il doit, au contraire, choisir un mode de transmission analogique. Le message 41 est ainsi affiché par l'exécution d'une instruction 42, éditée par le décodeur 1 et exécutée par le récepteur 2. Le message 41 et/ou l'instruction 42 pourront être agrémentés de tout autre type d'information ou de renvoi à une notice d'utilisation du décodeur 1 et/ou du récepteur 2.

On note que, si la précaution d'exécution de l'instruction 38 est utile, elle n'est pas, à proprement parler, indispensable au procédé de l'invention. En effet, comme on le verra par la suite, l'instruction 42 ou une instruction ayant les mêmes buts et effets peut être provoquée d'une autre manière. Une telle transmission de l'instruction 42, non sonore et non cryptée, est normalement supportée par les protocoles HDMI et DVI non cryptés.

Si le récepteur 2 a répondu au décodeur 1 qu'il était capable de décrypter les messages, le programme 36 comporte ensuite une instruction 43 au cours de laquelle deux opérations sont menées. Premièrement, le décodeur 1 envoie au récepteur 2 une question relative au fait que le protocole HDMI serait supporté par le récepteur 2 ou non. Cette question est du type de celle évoquée dans les phases préliminaires d'établissement des protocoles HDMI. Par la liaison 35, le récepteur 2 doit donc émettre un message d'accusé réception de la question, et de réponse, indiquant son aptitude, au moins théorique, à recevoir des signaux transmis selon le protocole HDMI.

En même temps, l'instruction 43 comporte le lancement d'un premier compteur de délai. Le compteur de délai peut être réalisé sous une forme matérielle dans le décodeur 2, ou sous une forme logicielle par une série d'instructions du sous programme 36. A la suite de l'instruction 43, le sous programme 36 comporte une instruction de test 44 pour savoir si le délai lancé par le premier compteur de délai est expiré. Ce premier délai, qui peut par exemple être de l'ordre d'une ou deux secondes, est mis à profit pour lancer par ailleurs, tant qu'il n'est pas expiré, un test pour savoir si la réponse oui est reçue en provenance du récepteur 2 à la question 43. Si elle n'est pas reçue, le programme se reboucle sur le test de l'instruction 44.

Si la réponse oui n'est pas reçue dans le premier délai, court, le programme 36 lance une instruction 50 qui sera étudiée plus loin.

Si la réponse oui est reçue du récepteur 2, ceci signifie que, au moins théoriquement, le récepteur 2 est capable de recevoir et traiter les signaux transmis au protocole HDMI. Le cas échéant, on lance une deuxième double instruction 46. La double instruction 46 comporte d'une part un envoi d'une image 47 selon le protocole HDMI (prétendument supporté) du décodeur 1 au récepteur 2. Cette image 47 est destinée à s'afficher sur l'écran 30. Cette image 47 représente un message de demande d'action de l'utilisateur sur les boutons 32, ou à l'aide de sa télécommande 34. En même temps que cette demande, est lancé un deuxième compteur de délai qui va mesurer, au cours d'une deuxième durée que l'utilisateur a bien compris la question. La mesure résulte de ce que l'utilisateur a bien vu l'image s'afficher sur l'écran 30, donc que celle-ci est effectivement affichable, et que l'utilisateur a agi en conséquence. Le deuxième compteur de délai compte une deuxième durée plus longue, par exemple, de l'ordre de 5 secondes, voire plus. L'instruction 46 est elle-même suivie d'un test 48 qui mesure si le deuxième délai est expiré. Si le deuxième délai n'est pas expiré, un test suivant 49 mesure que la réponse reçue du récepteur 2 est la réponse attendue. Par exemple, si le message 47 apparaissant sur l'écran 30 demande que l'utilisateur appuie sur la touche " * ", le test 49 attend, transmis par la liaison 35 en retour, que le récepteur 2 informe le décodeur 1 qu'effectivement l'utilisateur a appuyé sur la touche " * ". Si c'est le cas, le décodeur 1 de l'invention considère que, effectivement, le récepteur 2 est apte à traiter correctement les signaux qui lui sont transmis selon le protocole HDMI. Et dans ce cas, la configuration en protocole HDMI est validée.

Par contre, il peut arriver que la réponse reçue, ne soit pas bonne, soit même ne soit pas reçue. Elle n'est pas bonne ou pas reçue si le message 47 ne s'est pas affiché correctement sur l'écran 30, si en définitive, malgré sa déclaration théorique préliminaire, le récepteur 2 n'est pas capable de bien traiter les signaux transmis au protocole HDMI. Dans ce cas, il y a peu de chances pour que l'utilisateur effectue l'opération qu'on attendait de lui. Pour éviter des fausses bonnes réponses, on peut par ailleurs prévoir que la combinaison de touches demandée à l'utilisateur soit plus complexe que " * " afin d'en réduire les probabilités d'envoi. En effet, un utilisateur insatisfait va, dans un premier temps, appuyer sur tous les boutons dans un ordre aléatoire pour tenter de résoudre son problème.

Si donc la bonne réponse n'est pas reçue, le test 48 conduit alors à l'exécution par le sous programme 36 d'une macro instruction 50. La macro instruction 50 constate en définitive que le protocole HDMI n'est pas supporté par le récepteur 2. Cet échec est constaté à l'expiration des premier ou deuxième délais. Dans ce cas, la macro instruction 50 comporte une première instruction 51 de commutation du protocole HDMI en protocole DVI. La commutation 51 est une instruction automatique. Elle peut comporter par ailleurs l'envoi du décodeur 1 au récepteur 2 de tous les signaux de préambule des phases préliminaires permettant à ces deux appareils de se reconnaître selon le protocole DVI. Une fois que ce protocole est reconnu ou au moins imposé, le décodeur 1 envoie, au cours d'une instruction 52 de la macro instruction 50, une deuxième image, au protocole DVI cette fois. Cette deuxième image est du même type que l'image 47 précédente. Eventuellement, il peut s'agir de la même image 47, demandant à l'utilisateur la même action, afin de ne pas éveiller son attention. Autrement, le message affiché peut être différent du message 47, avec toutefois les mêmes effets : une action de l'utilisateur est attendue.

La macro instruction 50 comporte également le lancement d'un troisième délai 53 au moment de l'envoi de cette deuxième image. L'instruction 53 est suivie, comme ci-dessus, d'un test 54 pour savoir si le troisième délai du compteur de délai 53 est expiré. La durée du troisième délai est du même ordre que celle du deuxième délai. Si le délai n'est pas expiré, au cours d'un test 55 consécutif au test 54, le décodeur 1 mesure que la réponse attendue est reçue du récepteur 2. Si c'est effectivement le cas, le décodeur 1 lance alors une instruction 56 d'envoi d'une troisième image 57, en protocole DVI, au récepteur. L'image 57 a pour objet d'inviter l'utilisateur à brancher un câble audio 58 entre la sortie son de l'interface 15 du décodeur 1 et l'entrée son 59 du récepteur 2. A cet effet, cette entrée son 59 est aussi reliée au bus 24, ou, par d'autres moyens, au dispositif 29 de diffusion du son.

De la même façon que les signaux de type HDMI ou DVI, sont normalement codés et cryptés, sous le format HDCP, les signaux de sons sont codés sous un format de type SPDIF bien connus et bien supportés des différents récepteurs 2. A cet effet, les programmes 21 et 27 comportent des sous programmes, HDMI, DVI, HDCP, et SPDIF, capables de coder ou d'interpréter les signaux qui leur sont transmis selon ces modes.

Si au cours du test 54, la réponse reçue du récepteur n'est pas la réponse attendue, le sous programme 36 envoie au récepteur 2, en mode HDMI non crypté le message de l'instruction 42, préconisant une utilisation d'une sortie analogique de type YPrPb notamment.

## Revendications

1. Procédé de décodage d'un signal (4) audio vidéo dans lequel
- on reçoit (3) un tel signal dans un décodeur (1),
- on le décode (22) dans le décodeur, et on obtient un signal numérique crypté,
- on transmet, selon un protocole HDMI, le signal numérique crypté, correspondant au signal audio vidéo crypté, du décodeur à un récepteur (2) muni d'un écran (30) de visualisation et de dispositifs (29) de diffusion du son, **caractérisé en ce que**
- on vérifie (43) que le protocole HDMI est correctement supporté par le récepteur, et
- si ce n'est pas le cas (44, 48),
- on commute (37) le protocole de transmission du protocole HDMI en protocole DVI,
- on transmet le signal numérique crypté du décodeur au récepteur selon le protocole DVI.

2. Procédé selon la revendication 1, **caractérisé en ce que**
- pour vérifier que le protocole HDMI est correctement supporté, le décodeur lit une information correspondante dans le récepteur,
- si l'information indique que le protocole HDMI n'est pas supporté, notamment avant l'expiration d'un premier délai,
- on provoque automatiquement (50) dans le décodeur une commutation de protocole de transmission du protocole HDMI en protocole DVI.

3. Procédé selon l'une des revendications 1 à 2, **caractérisé en ce que**
- pour vérifier que le protocole HDMI est correctement supporté par le récepteur,
- le décodeur envoie (46) une première image (47) selon le protocole HDMI au récepteur,
- cette première image invitant un utilisateur à effectuer une action, puis
- on mesure dans le décodeur que l'action de l'utilisateur, transmise du récepteur au décodeur, est conforme à celle attendue,
- si cette action est conforme, on valide la configuration du décodeur en protocole HDMI.

4. Procédé selon la revendication 3, **caractérisé en ce que**
- on déclenche un compteur d'un deuxième délai dès cette invitation, et
- si cette action n'est pas conforme, à l'issue du deuxième délai,
- on provoque (48) automatiquement (50) dans le décodeur une commutation de protocole de transmission du protocole HDMI en protocole DVI.

5. Procédé selon l'une des revendications 1 à 4, **caractérisé en ce que**
- au moment de la commutation de protocole de HDMI en DVI
- le décodeur envoie (52) une deuxième image (47) selon ce protocole DVI au récepteur,
- cette deuxième image invitant un utilisateur à effectuer une action, puis
- on mesure dans le décodeur que l'action de l'utilisateur, transmise du récepteur au décodeur, est conforme à celle attendue,
- si cette action est conforme, on invite (53) l'utilisateur à connecter (57) un câble audio entre le décodeur et le récepteur.

6. Procédé selon la revendication 5, dans lequel
- on déclenche un compteur d'un troisième délai dès cette commutation, et
- si l'action de l'utilisateur n'est pas conforme, à l'issue du troisième délai,
- le décodeur envoie (42) une image (41) au récepteur dont la visualisation par un utilisateur invite ce dernier à visualiser le signal audio vidéo selon un mode analogique.

7. Procédé selon l'une des revendications 1 à 6, **caractérisé en ce que**
- on vérifie (38) préalablement que le récepteur est capable de recevoir un signal vidéo crypté, et
- si (40) ce n'est pas le cas,
- le décodeur envoie (42) une image (41) au récepteur dont la visualisation par un utilisateur invite ce dernier à visualiser le signal audio vidéo selon un mode analogique.

8. Procédé selon l'une des revendications 1 à 7, **caractérisé en ce que**
- on démodule (14) dans le décodeur le signal audio vidéo reçu.

9. Procédé selon l'une des revendications 1 à 8, **caractérisé en ce que**
- les protocoles HDMI et/ou DVI sont mis en oeuvre sur des signaux cryptés selon le protocole HDCP.

## Claims

1. A method of decoding an audio video signal (4) in which
- such a signal is received (3) in a decoder (1),
- the signal is decoded (22) in the decoder, and an encrypted digital signal is obtained,
- the encrypted digital signal, corresponding to the encrypted audio video signal, is transmitted according to an HDMI protocol from the decoder to a receiver (2) equipped with a display screen (30) and sound diffusion devices (29),
**characterized in that**
- the invention verifies (43) that the HDMI protocol is correctly supported by the receiver, and
- if this is not the case (44, 48),
- the transmission protocol is switched (37) from the HDMI protocol to the DVI protocol,
- the digital encrypted signal is transmitted from the decoder to the receiver according to the DVI protocol.

2. The method according to claim 1, **characterized in that**
- to verify that the HDMI protocol is correctly supported, the decoder reads corresponding information in the receiver,
- if the information indicates that the HDMI protocol is not supported, particularly before expiration of a first time,
- a transmission protocol switching from the HDMI protocol to the DVI protocol is automatically effected (50) in the decoder.

3. The method according to one of claims 1 to 2, **characterized in that**
- to verify that the HDMI protocol is correctly supported by the receiver,
- the decoder sends (46) a first image (47) according to the HDMI protocol to the receiver,
- this first image invites a user to perform an action, then
- the invention assesses in the decoder whether the action of the user, transmitted from the receiver to the decoder, conforms to the action expected,
- if this action is compliant, the configuration of the decoder in HDMI protocol is validated.

4. The method according to claim 3, **characterized in that**
- a counter of a second time is triggered from this invitation, and
- if this action is not compliant, after the second time,
- a switching of the transmission protocol from the HDMI protocol to the DVI protocol is automatically (50) effected (48) in the decoder.

5. The method according to one of claims 1 to 4, **characterized in that**
- when the protocol is switched from HDMI to DVI
- the decoder sends (52) a second image (47) according to this DVI protocol to the receiver,
- this second image invites a user to perform an action, then
- the invention assesses in the decoder whether the action of the user, transmitted from the receiver to the decoder, conforms to the action expected,
- if this action is compliant, the user is invited (53) to connect (57) an audio cable between the decoder and the receiver.

6. The method according to claim 5, in which
- a counter of a third time is triggered from this switching, and
- if the action of the user is not compliant, after the third time,
- the decoder sends (42) an image (41) to the receiver whose viewing by a user invites the user to display the audio video signal according to a similar method.

7. The method according to one of claims 1 to 6, **characterized in that**
- the invention verifies (38) beforehand that the receiver is capable of receiving an encrypted video signal, and
- if (40) this is not the case,
- the decoder sends (42) an image (41) to the receiver whose viewing by a user invites this user to display the audio video signal according to a similar method.

8. The method according to one of claims 1 to 7, **characterized in that**
- the audio video signal received is demodulated (14) in the decoder.

9. The method according to one of claims 1 to 8, **characterized in that**
- the HDMI and/or DVI protocols are implemented on the signals encrypted according to the HDCP protocol.

## Patentansprüche

1. Verfahren zum Decodieren eines Audio-Video-Signals (4), bei dem
- ein solches Signal in einem Decoder (1) empfangen wird (3),
- es in dem Decoder decodiert wird (22) und ein verschlüsseltes digitales Signal erhalten wird,
- nach einem HDMI-Protokoll das verschlüsselte digitale Signal entsprechend dem verschlüsselten Audio-Video-Signals vom Decoder an einen Empfänger (2) übertragen wird, der mit einem Anzeigebildschirm (30) und Tonverbreitungsvorrichtungen (29) versehen ist, **dadurch gekennzeichnet, dass**
- überprüft wird (43), ob das HDMI-Protokoll richtig vom Empfänger gestützt wird, und
- wenn dies nicht der Fall ist (44, 48),
- das Übertragungsprotokoll vom HDMI-Protokoll in ein DVI-Protokoll umgeschaltet wird (37),
- das verschlüsseltes digitale Signal vom Decoder an den Empfänger nach dem DVI-Protokoll übertragen wird.

2. Verfahren nach Anspruch 1, **dadurch gekennzeichnet, dass**
- zur Überprüfung, ob das HDMI-Protokoll richtig gestützt wird, der Decoder eine entsprechende Information im Empfänger abliest,
- wenn die Information angibt, dass das HDMI-Protokoll nicht gestützt ist, insbesondere vor Ablaufen der ersten Frist,
- automatisch im Decoder eine Umschaltung des Übertragungsprotokolls vom HDMI-Protokoll in ein DVI-Protokoll hervorgerufen wird (50).

3. Verfahren nach einem der Ansprüche 1 bis 2, **dadurch gekennzeichnet, dass**
- zur Überprüfung, ob das HDMI-Protokoll richtig vom Empfänger gestützt wird,
- der Decoder ein erstes Bild (47) nach dem HDMI-Protokoll an den Empfänger sendet (46),
- wobei dieses erste Bild einen Benutzer auffordert, eine Aktion durchzuführen, dann
- in dem Decoder gemessen wird, ob die Aktion des Benutzers, die vom Empfänger an den Decoder übertragen wird, der erwarteten entspricht,
- wenn diese Aktion konform ist, die Konfiguration des Decoders im HDMI-Protokoll validiert wird.

4. Verfahren nach Anspruch 3, **dadurch gekennzeichnet, dass**
- ein Zähler einer zweiten Frist bei dieser Aufforderung ausgelöst wird, und
- wenn diese Aktion nicht konform ist, nach der zweiten Frist
- automatisch (50) im Decoder eine Umschaltung des Übertragungsprotokolls vom HDMI-Protokoll in ein DVI-Protokoll hervorgerufen wird (48).

5. Verfahren nach einem der Ansprüche 1 bis 4, **dadurch gekennzeichnet, dass**
- zum Zeitpunkt der Umschaltung vom Protokoll HDMI in DVI
- der Decoder ein zweites Bild (47) nach diesem DVI-Protokoll an den Empfänger sendet (52),
- wobei dieses zweite Bild einen Benutzer auffordert, eine Aktion durchzuführen, dann
- in dem Decoder gemessen wird, ob die Aktion des Benutzers, die vom Empfänger an den Decoder übertragen wird, mit der erwarteten übereinstimmt,
- wenn diese Aktion konform ist, der Benutzer aufgefordert wird (53), ein Audiokabel zwischen dem Decoder und dem Empfänger anzuschließen (57).

6. Verfahren nach Anspruch 5, bei dem
- ein Zähler einer dritten Friste bei dieser Umschaltung ausgelöst wird, und
- wenn die Aktion des Benutzers nicht konform ist, nach der dritten Frist
- der Decoder ein Bild (41) an den Empfänger sendet (42), dessen Anzeige durch einen Benutzer diesen letztgenannten auffordert, das Audio-Video-Signal im Analogmodus anzuzeigen.

7. Verfahren nach einem der Ansprüche 1 bis 6, **dadurch gekennzeichnet, dass**
- vorher überprüft wird (38), ob der Empfänger ein verschlüsseltes Videosignal empfangen kann, und
- wenn dies nicht der Fall ist (40),
- der Decoder ein Bild (41) an den Empfänger sendet (42), dessen Anzeige durch einen Benutzer diesen letztgenannten auffordert, das Audio-Video-Signal in einem Analogmodus anzuzeigen.

8. Verfahren nach einem der Ansprüche 1 bis 7, **dadurch gekennzeichnet, dass**
- in das empfangene Audio-Video-Signal demoduliert wird (14).

9. Verfahren nach einem der Ansprüche 1 bis 8, **dadurch gekennzeichnet, dass**
- die Protokolle HDMI und/oder DVI an verschlüsselten Signalen nach dem HDCP-Protokoll eingesetzt werden.
